Europäisches Patentamt

European Patent Office

Office européen des brevets

(11) Publication number: **0 495 433 A2**

# EUROPEAN PATENT APPLICATION

(21) Application number: **92100453.7**

(22) Date of filing: **13.01.92**

(51) Int. Cl.5: **G03G 15/22**, H04N 1/00

(30) Priority: **15.01.91 US 641212**

(43) Date of publication of application:
**22.07.92 Bulletin 92/30**

(84) Designated Contracting States:
**DE FR GB IT**

(71) Applicant: **Hewlett-Packard Company**
**Mail Stop 20 B-O, 3000 Hanover Street**
**Palo Alto, California 94304(US)**

(72) Inventor: **Hirahara, Edwin**
**11993 Jody Drive**
**Boise, Idaho 83704(US)**

(74) Representative: **Baillie, Iain Cameron et al**
**Ladas & Parry Altheimer Eck 2**
**W-8000 München 2(DE)**

(54) **Combined printer, copier, scanner, and facsimile apparatus and method of operation.**

(57) Hybrid document reproduction apparatus (10) (HYDRA) combining a printer, copier, scanner, and facsimile device and method of operation. This equipment includes, among other things, a mogation driven mechanical and electrical scanner (12) including an array of photodetectors (68) mounted on one side of a mogation bar (52) and an array of light emitting devices (70) mounted on the other side thereof. By mechanically mogating and driving the mogation bar (52) in a direction (72, 74) transverse to the movement of documents being copied (48) or printed (50) and by also simultaneously electrically scanning the photodetectors (68) and light emitting devices (70) on the mogation bar (52), the number of light sensitive and light generating devices required for a given printing or copying resolution are minimized. This feature in turn significantly reduces cost, weight, and heat dissipation requirements of this document reproduction apparatus and system while simultaneously optimizing its resolution capabilities and overall reliability. The above mogation operation may be achieved by mounting the ends of the mogation bar (52) into flexible disk members (64, 86) and then electromagnetically driving the mogation bar at the desired mogation frequency.

FIG. 1.

## Technical Field

This invention relates generally to monochromatic and color printers and copiers and more particularly to this type of electrophotographic equipment which is operative to print, copy, scan, and send facsimile messages.

## Background Art

Significant efforts are presently being made in the United States, Japan and other countries to develop a single device that can print, copy, scan, and send facsimile messages, and such efforts have been recently reported in the literature. One such report was made on February 22, 1990, by Lawrence Hooper in the Technology Section of The Wall Street Journal (WSJ) at page B-1 in an article entitled "Hybrid Document Reproduction Apparatus (HYDRA) Evolves to Merge Fax, Printer and Copier". This article is also subtitled "Race Is On To Develop A Device That Can Fax, Print, Copy, and Scan" and this WSJ reference is incorporated fully herein by reference. Among other things, this Wall Street Journal article expresses an opinion that this proposed HYDRA machine will be the most important office product in the next decade.

More recently in October 1990, the Xerox Corporation of Rochester, New York announced the introduction of its new HYDRA machine at a trade show in New York City which is to be sold under the tradename "DocuTech" and was described as a $200,000 machine that combines a copier, a printer, a facsimile machine, an image scanner and personal computer technology. Later on in November of 1990, Canon of Japan introduced its new "Navigator" at the COMDEX trade show in Las Vegas, Nevada, and this new machine was advertised as combining a small personal computer, telephone, answering machine, facsimile, and printer designed for the home and office markets. Thus, the current high level of interest in this newly proposed HYDRA office product and the desirability of consolidating these multiple functions into a single reliable and economical piece of office equipment are manifest. However, as far as is known, none of the above newly proposed and offered HYDRA office products nor any of the other scanning and printing prior art of which I am aware utilize or suggest the mechanical and electrical scanning and printing techniques which are made possible in accordance with the teachings of the present invention.

## Disclosure of Invention

The general purpose and principal object of this invention is to provide a novel method, apparatus and system arrangement for consolidating the above different document generating and processing functions in a single piece of office equipment which is operative at a relatively high resolution.

Another object of this invention is to provide a new and improved office machine of the type described which is capable of providing the above described multiple functions at a reasonable manufacturing cost.

Another object of this invention is to provide a new and improved combined method of printing, copying, scanning, and faxing and related apparatus of the type described whose power consumption, weight and heat dissipation levels have been minimized, thereby enhancing device reliability and its price/performance figure of merit.

Another object of this invention is to provide a new and improved method and apparatus of the type described which is operative to generate an analog representation of a scanned image as a continuous pictorial of each surface area scanned. This analog scanning technique uses a mechanically and electrically scanned combination light emitting diode (LED) and photodetector mogation bar described below and enables the photodetectors to "see" all of the pictorial information in a scanned image which is not possible using stationary digital sampling techniques.

Another object of this invention is to provide a new and improved method and apparatus of the typed described wherein equal resolution may be achieved in both horizontal and vertical scan directions by varying the X and Y scan rates either mechanically or electrically, or both.

Another object of this invention is to provide a new and improved method and apparatus of the type described wherein the improvement in scanning resolution has either lessened or eliminated the need for using gray scale signal processing techniques.

Another object of this invention is to achieve increased printing speeds in the method and apparatus of the type described.

These objects are accomplished by, among other things, providing a composite document generating and processing apparatus including a carriage member having a plurality of light emitting devices (LEDs) mounted on one surface thereof and a plurality of photodetectors (PDs) mounted on another surface thereof. A photoconductive drum is positioned adjacent to the light emitting devices for receiving write or print signals therefrom, and a media support and transfer member is located adjacent to the photoconductive drum and defines a printing station and media (paper) transport path for printing and transporting documents for accumulation at a first document receiving station. The photodetectors on the carriage member are located adjacent a document transport path within the apparatus and are operative to scan documents moving adjacent thereto before passing to a second document receiving station. Carriage control means are coupled to the carriage member for mogating (oscillating back and forth) the carriage member in a direction transverse (perpendicular) to both blank paper and printed document movement, thereby minimizing the number of light emitting devices and photodetectors required for a given scan and print operation and resolution.

This novel arrangement also assures a relatively high scan and print resolution and a corresponding minimum of heat and power dissipation in the document processing apparatus. Furthermore, the transverse mogation of the light emitting devices during printing enhances the capability of this apparatus to print a greater number of character and image contours and with less memory as compared to the case of a stationary LED carriage and associated scanning electronics.

In accordance with the present invention: (1) blanket sheets of paper can be printed by the use of light data signals generated by the light emitting devices, (2) printed documents can be scanned by the photodetectors and directly copied by a novel cooperative arrangement and electrical connection between the photodetectors and the light emitting devices, and (3) document information may be scanned by the photodetectors, then stored in memory and subsequently written or printed out by the light emitting devices.

From the standpoint of individual office products now made possible by the new technologies presented herein, there is first the LED mogation-driven printer per se which may be the prospective office product candidate closest to market.

Secondly, a mogation-driven photodector copier per se is a single function device which is also a very viable candidate for an early market office product.

Thirdly, the combination of the above printer and copier and scanner as described previously may also be an early HYDRA product to reach the office products market.

Fourthly, the present invention opens up new fields of data processing methodologies and data storage algorithms for use with the three preceding office product candidates. These algorithms and data processing methodologies will be useful to enhance the quality of images and characters which will be generated by these three future office products.

Within the broad functional claims of this invention, the novel method described herein includes the steps of:

a. providing a blank paper transport path and a printed document transport path,

b. providing a carriage member having a plurality of photodetectors thereon facing the printed document transport path and a plurality of light emitting devices thereon facing the blank paper transport path, and

c. providing transverse mogation or oscillation to the carriage member with respect to the direction of both paper (to be printed) and printed document movement, whereby both mechanical and electrical scanning of both the photodetectors and the light emitting devices may be simultaneously achieved in a single document generating and processing apparatus.

In one embodiment of this invention, the above method further includes:

d. writing a latent image on a photoconductive drum with light from said light emitting devices, and

e. transferring the latent image from the drum to a blank sheet of paper passing adjacent to the drum to thereby provide printed documents for accumulation in an output collection bin or the like.

As will be apparent from the following description of the additional embodiments and appended claims, other novel features of this invention include a mogation driven LED printer per se, a mogation driven photodetector copier per se, and the per se combination and use of a single carriage member as described above having LEDs mounted on one surface thereof and photodetectors mounted on another surface thereof and operative for use with electrical scanning and further operative with and without mogation or mechanical oscillation or scanning.

Accordingly, a novel feature of this invention is the provision of a combination LED-photodetector mogation bar and method of operation wherein both the LEDs and photodetectors on the bar may be mechanically and electrically scanned at the same time. This feature greatly enhances achievable resolutions, and it simultaneously minimizes the number of LEDs and photodetectors required to be mounted on the scanning mogation bar to achieve a given required resolution. By in turn minimizing the latter requirement, the HYDRA apparatus cost, weight, and heat dissipation requirements are also minimized.

The above objects, novel features and other attendant advantages of this invention will become more readily understood from the following description of the accompanying drawings.

Brief Description of the Drawings

Figure 1 is a functional block diagram of the HYDRA electrical system according to the present invention.

Figure 2A is an abbreviated and partially cut away isometric view showing how the LED and photodetector mogation bar can be mounted within a piece of HYDRA office equipment.

Figure 2B is an enlarged isometric view of the scanner input stage, including the LED and photodetector mogation bar and adjacent photoconductive drum, shown in Figure 2A.

Figure 3A is an enlarged isometric view showing how the LED and photodetector mogation bar in Figures 2A and 2B above may be mounted between a pair of flexible end disk members for being driven back and forth in the direction of the arrows shown.

Figure 3B is a cross sectional view taken along lines B-B of Figure 3A.

Figure 4 is an enlarged cross sectional view showing one mounting arrangement suitable for electromagnetically driving the LED-photodetector mogation bar and mounted as shown on one of the circular flexible disk members in Figure 3A.

Detailed Description of the Preferred Embodiment

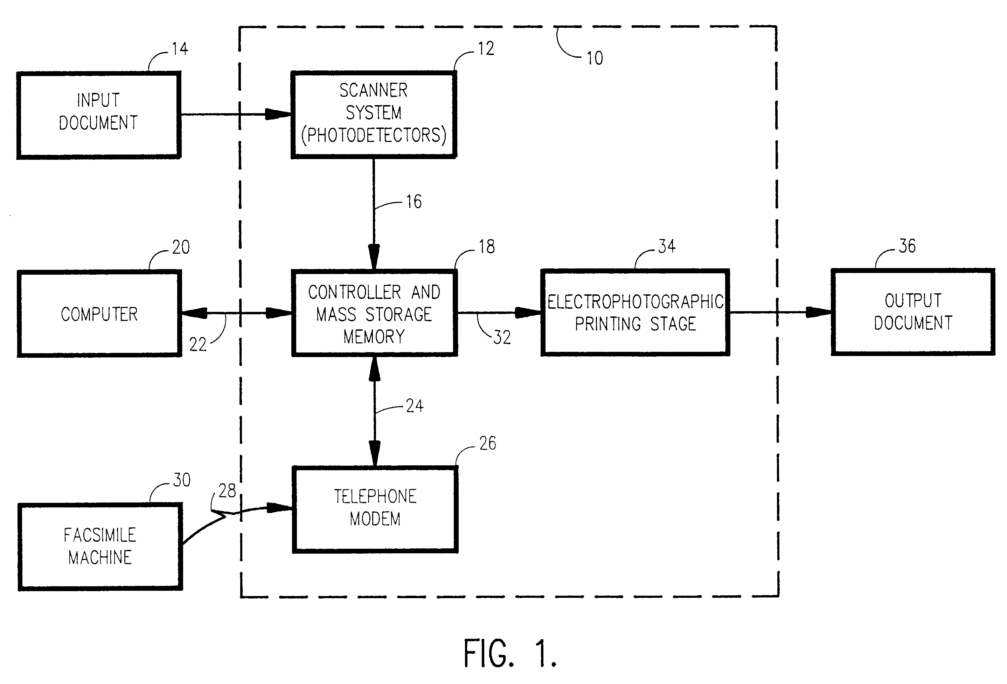

Referring now to Figure 1, the various electronic stages contained within the dotted line area 10 are those located within the main housing of the hybrid document processing or HYDRA equipment shown in the remaining figures of this specification. These various stages include a scanner 12 having a plurality of photodetectors therein to be described and which is operative to scan the contents of an adjacent passing input document 14. The scanner 12 is further operative to generate a scanned image output signal on line 16 which is then applied to a controller and mass storage memory stage 18. The controller and mass Storage memory stage 18 is connected to electrically interface with an external computer 20 via the two-way electrical interconnection 22 as shown and is further interconnected by another two way electrical interconnection 24 to a telephone modulator-demodulator (modem) unit 26. The telephone modem 26 may be connected in convention fashion via telephone lines 28 to a remote facsimile machine 30 in a well known manner.

The controller and mass storage memory stage 18 has its electrical output connection 32 connected to an electrophotographic printing stage 34, such as a laser printer, which is operative to generate and print an output document indicated at 36 in Figure 1. Thus, the computer 20 is operative to generate an output command signal on its output line 22 and thereby direct the controller and mass storage memory stage 18 to either drive the electrophotographic printing stage 34 to directly print an output document 36 or to direct the scanner system 12 to scan a passing input document 14 and thereafter either store its contents in the memory stage 18 or directly print its contents in the electrophotographic printing stage 34. In addition, information received from the telephone lines 28 from a remote facsimile machine 30 may be converted by the telephone modem 26 to provide an input information signal on line 24 and applied to the controller and mass storage memory stage 18. This information is then stored in memory in stage 18 and subsequently made available on line 32 for application to the electrophotographic printing stage 34 where it may be printed as the output document 36.

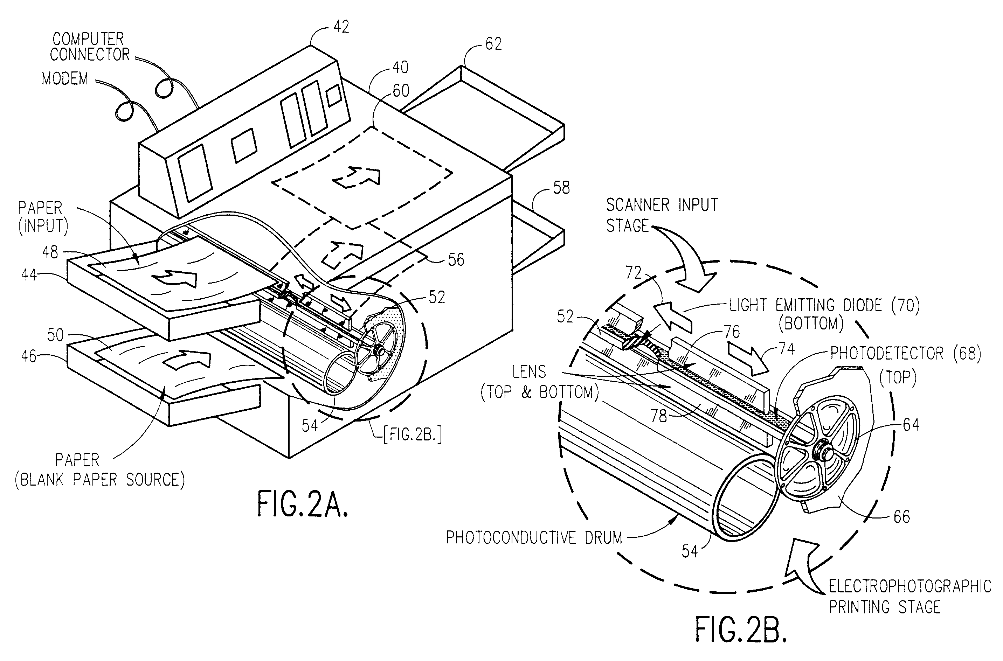

Referring now to Figure 2A, the HYDRA office equipment described and claimed herein includes a main housing 40 upon whose top surface is mounted a display panel 42. The input document and blank paper trays 44 and 46, respectively, are mechanically joined to the near end of the housing 40 and are operative to receive, respectively, a stack of printed input documents 48 and a stack of blank sheets of paper 50. Blank sheets from the paper source 50 are guided past the lower surface of the LED/photodetector mogation bar 52 and photoconductor 54 which is operative to receive "write" data from the LEDs of the mogation bar 52. The printed input documents from the stacked pages 48 are guided past the top surface of the LED/photodetector mogation bar 52 adjacent to a location thereon where the photodetectors are mounted. Thus, printed media on the downwardly facing surfaces of the printed documents 48 may be read by an array of photodetectors mounted on the upper surface of the mogation bar 52, and this scanned information is then passed either directly or indirectly to the light emitting diodes mounted on the other side of the mogation bar 52. These LEDs are used to write the printed document information as a latent image onto the photoconductive drum 54 which is operative in a well known manner to transfer the latent image in a conventional fashion to a blank piece of paper 50 which then passes through the position indicated generally at the dotted line 56 and then into a first document collection output tray 58. Contemporaneously, the printed input document 48 passes through the dotted line position indicated generally at 60 and on into a second document collection output tray 62.

Referring now to Figure 2B, the LED and photodetector mogation bar 52 and associated photoconductive drum 54 of the scanner input stage 12 shown in Figure 1 have been enlarged to illustrate one suitable mounting arrangement for the mogation bar 52 onto flexible ribbed disk shaped end pieces 64 affixed to each end of the mogation bar 52. Each flexible end piece 64 may in turn be securely mounted to an adjacent wall or housing member 66, and an array photodetectors 68 are linearly arranged on the top surface of the mogation bar 52, whereas an array of light emitting diodes 70 are linearly arranged on the bottom surface of the mogation bar 52. Thus, when the mogation bar 52 is mechanically scanned back and forth in the direction of the arrows 72 and 74, and simultaneously electrically scanned, the array of photodetectors 68 is operative to scan a printed input document at relatively high scan resolutions and scan speeds. The array of light emitting diodes 70 which is mounted on the bottom surface of the mogation bar 52 is operative to provide a write input data signal to the surface of the adjacent photoconductive drum member 54 from where a written latent image is transferred to a blank sheet of paper 50 using well known LED electophotographic printing processes. Generally speaking, the writing of latent images on a photoconductive drum is well known in the art and is described, for example, in U.S. Patent application Serial No. 07/561,831 of Chris A. Storlie filed August 2, 1990, assigned to the present applicant and incorporated herein by reference.

The LED-photodetector mogation bar 52 further includes top and bottom lens members 76 and 78 which are utilized for focusing the input and output image data to and from the arrays of photodetectors 68 and light emitting diodes 70, respectively.

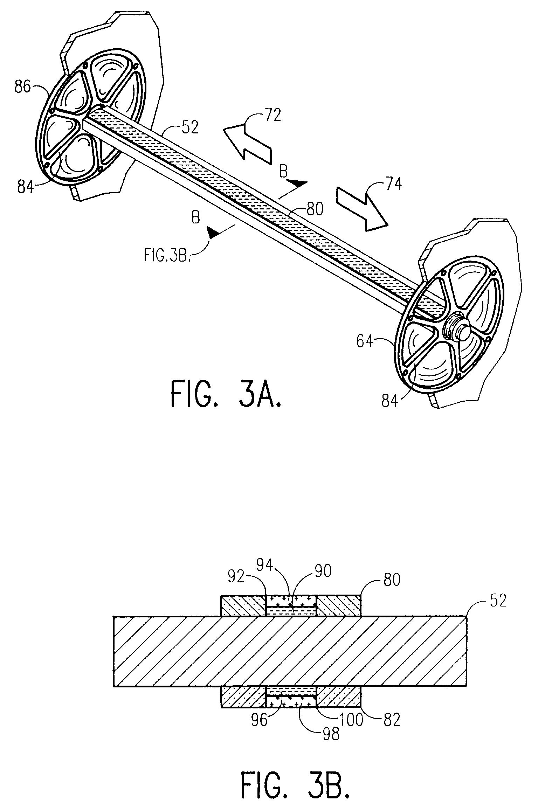

Referring now to Figures 3A and 3B, the LED-photodetector mogation bar 52 will typically include an elongated strip 80 on the top side of the bar 52 and containing the array of photodetectors 68 and a similar elongated strip 82 on the underside of the mogation bar 52 and containing the array 70 of light emitting diodes. As the mogation bar 52 is electromagnetically driven back and forth in the direction of the arrows 72 and 74 as shown, the rib members 84 of each of the circular shaped disk support members 64 and 86 will flex and be driven in an oscillatory motion in the direction of the arrows 72 and 74 so as to enable the arrays of photodetectors 80 and light emitting diodes 82 to simultaneously mechanically and electrically scan and print documents in the manner described above.

Therefore, when the mogation bar 52 is provided with controlled mechanical oscillations in a direction transverse to the direction of paper motion in either of the document flow paths 56 and 60, not only do the photodetectors 68 on the top surface of the mogation bar 52 mechanically scan the printed documents in the path 60, but these photodetectors 68 may be electrically scanned as well in order to greatly enhance the resolution capability of the system. For example, using prior art fixed position photodetectors and light emitting diodes, as many as three hundred to four hundred and fifty (300-450) photodetectors per linear inch of detector array was required if the sampling resolution needed in a given copying or scanning application is a corresponding three hundred to four hundred fifty dots per inch. However, in accordance with the present invention, this number of photodetectors per linear inch of photodetector array may be reduced by as much as 75% of the prior art requirement of three hundred photodetectors per linear inch, or reduced to a now-required 75 photodetectors per linear inch using the mogation scanning arrangement and technique described herein.

Referring again to Figure 3B, in a preferred embodiment of the invention, the individual photodetector elements within the photodetector array may be positioned as indicated at region 90 within a central opening or cavity 92 located within the photodetector array housing strip 80. The individual photodetector elements 90 may then be covered with a suitable protective transparent lens material 94 as indicated.

Similarly, the individual light emitting diode elements may be positioned in a region 96 on the lower surface of the mogation bar 52 and there covered with a protective transparent lens material 98 as indicated and positioned in the central opening or cavity 100 in the LED housing strip 82.

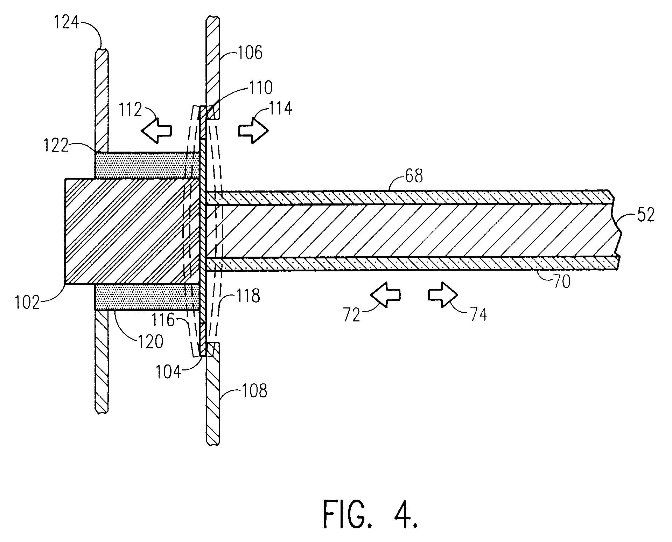

Referring now to Figure 4, the above described transverse mogation or oscillation of the LED-photodetector mogation bar 52 may be accomplished by the use of an electromagnetic drive arrangement consisting of an electromagnet 102 which is securely attached to one side of a flexible circular ribbed disk member 104 at one end of the mogation bar 52. The flexible disk member 102 is further secured as shown to the ends 106 and 108 of an adjacent support housing, and the opening 110 in the support housing 106 and 108 allows the disk member 104 to freely move laterally back and forth in the direction of the arrows 112 and 114 and between the dotted line disk positions indicated at 116 and 118.

The electromagnet 102 is surrounded by an oscillation drive coil 120 which is connected to receive an oscillation or mogation drive signal from an external source (not shown). The drive coil 120 is in turn mounted in an adjacent opening 122 of another housing member 124, and the electromagnet 102 is operative to move within the interior opening defined by the inner radius of the drive coil 120 and produce the transverse mogation and oscillation of the LED-photodetector mogation bar 52 in the direction of arrows 72, 74, and 112, 114 as indicated in Figure 4. Generally speaking, there is a linear relationship between the mogation frequency and the number of light emitting diodes and photodetectors required to achieve a fixed print or image conversion resolution. That is to say, as the mogation frequency is increased, the required number of LEDs and photodetectors is decreased. However, it will be understood and appreciated by those skilled in the art that there will be an upper limit imposed on the maximum available mogation frequency which is in turn dependent upon the time required for the light emanating from the array of LEDs to properly develop a latent image on an adjacent photoconductive drum.

As previously indicated, it is significantly advantageous in accordance with the present invention to be able to simultaneously scan both the photodetectors and light emitting diodes both mechanically and electrically in order to reduce the number of required photodetectors and light emitting diodes and thereby reduce their attendant power dissipation and heat dissipation requirements while still achieving an acceptable given dots per inch resolution. By using this approach to image conversion, a given desired resolution can be achieved with a lower electrical scan or sampling rate applied to both the photodetectors and light emitting diodes than would be required if the LED-photodetector bar 52 was maintained in a stationary position. Furthermore, by sampling a continuous wave scan made by the array of photodetectors 68, more information about a given image can be stored in the controller and mask storage memory stage 18 of Figure 1.

The mogation method described and claimed herein allows one to obtain an analog representation of a scanned image and to simultaneously produce an image with a variable resolution. This variable resolution is dependent upon the sample rate, and by using both mechanical and electrical scanning it is possible to obtain a continuous pictorial of each surface area scanned. This is to be contrasted to a fixed array of photodetectors, for example, where it is not possible to "see" all of the areas of scanned image. In addition, by using the mogation techniques described herein, the required number of photodetectors and LEDs is reduced, thereby significantly reducing the weight, size, cost and heat dissipation requirements (including large heat sinks) of the system while simultaneously enhancing its reliability and resolution capability. Furthermore, the present invention has the additional potential of eliminating the requirement for using gray scale image conversion techniques as a result of its enhanced resolution capabilities. Moreover, by properly controlling the scan rates in the X and Y directions, it is possible to achieve excellent scan resolutions in both the X and Y directions.

All of this scan information may be used for high resolution applications, or alternatively, only a fraction of this information may be needed in low resolution facsimile and other similar office copying applications. Thus, in these latter low resolution applications, high speed operation may be achieved at relatively low power and heat dissipation levels. Where only low resolution draft copies are required, the page per minute throughput can be greatly increased by simply reducing the dots per minute printed.

Various modifications may be made in and to the above described embodiments without departing from the spirit and scope of this invention. For example, the abbreviated schematic mechanical mounting arrangement of the mogation bar 52, together with it associated photodetectors and light emitting diodes and the photoconductive drum 54 is intended to illustrate only a general location in which this scanning arrangement may be located in a piece of HYDRA office equipment 40 having multiple paper and document paths 56 and 60 as shown therein. In addition, the present invention is not limited to the use of any particular scanning electronics which may be connected into both the photodetector array and the light emitting diode array by those skilled in the image printing and conversion arts and using known document scanning and light emitting diode writing and electrophotographic printing techniques. The use of fixed position LEDs to write text or graphics information onto a photoconductive drum or the like is generally well known in the art and is described, for example, in U.S. Patent No. 4,791,494 issued to Schaefer and in U.S. Patent No. 4,700,206 issued to Yamakawa, both incorporated herein by reference. The per se use of an array of photodetectors to scan printed documents and images is also generally well known in the document and image scanning arts. These scanning photodetectors are disclosed in many issued patents such as, for example, U.S. Patent No. 4,317,137 issued to E. N. Tompkins.

Accordingly, the above and other design modifications available to those skilled in the art are clearly within the scope of the following appended claims.

**Claims**

1. An apparatus (10) for printing and copying documents, including in combination;

   a. photosensitive copying means (68) and light generating means (70) mounted on a common support member (52),

   b. means for passing printed documents (48) past said photosensitive copying means to a document collection station (62), and

   c. printing means (54) adjacent to said light generating means (70) for receiving print signals from said light generating means (70) and for printing text or graphics on adjacent print media (50), whereby said photosensitive copying means (68) may operate to scan a printed document (48) and in turn generate write or print signals which are applied to said light generating means (70).

2. The apparatus claimed in claim 1 which further includes mogation means (64, 86) for oscillating said common support member (52) back and forth in a transverse direction (72, 74) with respect to the direction of motion of printed documents and print media.

3. The apparatus claimed in claims 1 or 2 which further includes means for both mechanically and electrically scanning said photosensitive copying means (68) and said light generating means (70) on said common support member (52).

4. The apparatus claimed in any one of the preceding claims which further includes signal processing means (12) connected to said photosensitive means (68) for receiving input data therefrom and in turn providing input information to a telephone modem (26), a facsimile machine, (30), a computer (20) or said light generating means (70).

5. The apparatus claimed in any one of the preceding claims further including controller and mass storage memory means (18) connected between said photosensitive copying and said light generating means for providing data storage therebetween as well as providing input data to a telephone modem (26) for a facsimile machine (30).

6. The apparatus claimed in claim 5 further including mogation means (64, 86) for oscillating said common support member (52) back and forth in a direction (72, 74) transverse with respect to the direction of motion of said printed documents and print media.

7. The apparatus claimed in claim 6 further including means (12) for electrically scanning said photosensitive copying means and said light generating means on said common support member.

8. A method for printing and copying documents which includes the steps of:
   a. mounting photosensitive elements (68) and light generating elements (70) on a common mogation bar (52),
   b. passing printed documents (48) past said photosensitive elements (68),
   c. passing blank paper (50) past said light generating elements (70), and
   d. oscillating said mogation bar (52) back and forth in a direction (72, 74) transverse to the direction of motion of said printed document (48) and blank paper (50) movement, whereby said documents and blank papers may be simultaneously scanned and printed.

9. The method claimed in claim 8 further including electrically scanning said photosensitive elements (68) and said light generating elements (70) simultaneously with the mechanical oscillation thereof.

10. The method claimed in claims 8 or 9 further including processing (18) light signals from said light generating elements (12) to electrophotographically print (34) text and graphics on blank print media (50).

11. The method claimed in any one of claims 8 to 10 further including writing on a photoconductive drum (54) with light received from said light generating elements (70) while said elements are being scanned (12) both mechanically and electrically.

12. The method claimed in any one of claims 8 to 11 further including processing signals from said photosensitive elements (68) to a data storage location (18) and then further processing signals from said data storage location (18) to a telephone modem (26) and a facsimile machine (30) for generating a facsimile output from input data received by said photosensitive elements (68).

INPUT
DOCUMENT

SCANNER
SYSTEM
(PHOTODETECTORS)

COMPUTER

CONTROLLER AND
MASS STORAGE
MEMORY

ELECTROPHOTOGRAPHIC
PRINTING STAGE

OUTPUT
DOCUMENT

FACSIMILE
MACHINE

TELEPHONE
MODEM

FIG. 1.

COMPUTER
CONNECTOR

MODEM

PAPER
(INPUT)

48

44

50

46

PAPER
(BLANK PAPER SOURCE)

42

40

60

62

58

56

52

54

[FIG.2B.]

FIG.2A.

SCANNER INPUT
STAGE

72

52

LIGHT EMITTING DIODE (70)
(BOTTOM)

76

74

PHOTODETECTOR (68)
(TOP)

LENS
(TOP & BOTTOM)

78

64

54

66

PHOTOCONDUCTIVE DRUM

ELECTROPHOTOGRAPHIC
PRINTING STAGE

FIG.2B.

EP 0 495 433 A2

FIG. 3A.

FIG. 3B.

FIG. 4.